# EUROPEAN PATENT APPLICATION

(11) **EP 1 156 675 A2**
(43) Date of publication of application: **21.11.2001**
(21) Application number: 01112248.8
(22) Date of filing: 18.05.2001
(51) Int. Cl.: H04N 7/01

(54) **Image display device**

(30) Priority: 18.05.2000 JP 2000147020
(71) Applicant: NEC CORPORATION, Tokyo (JP)
(72) Inventor: Shimizu, Yoshiharu, c/o NEC Corporation, Tokyo (JP)
(74) Representative: Glawe, Delfs, Moll & Partner

(57) **Abstract**

An image display device comprises a telecine discriminator (12) which determines whether an image signal input from an external unit is a telecine signal and computes a refresh rate of an original picture signal before conversion into the image signal; an IP converter (13) which converts the telecine signal by a 2-3 pull-down system; and the synchronous processor for read (17). The synchronous processor for read (17) reads an IP signal from a memory (15) at the timing of the refresh rate to smoothly output and display a picture without jerkiness when dynamic playback is carried out.

## Description

### BACKGROUND OF THE INVENTION

### FIELD OF THE INVENTION

The present invention relates to an image display device which converts an image on a source film into an electrical image signal and displays the image.

### DESCRIPTION OF RELATED ART

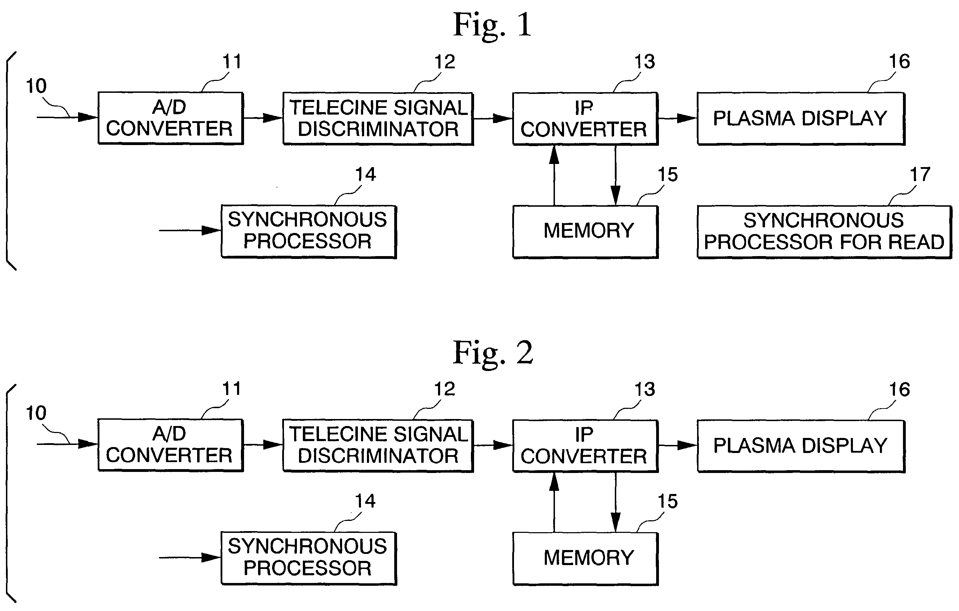

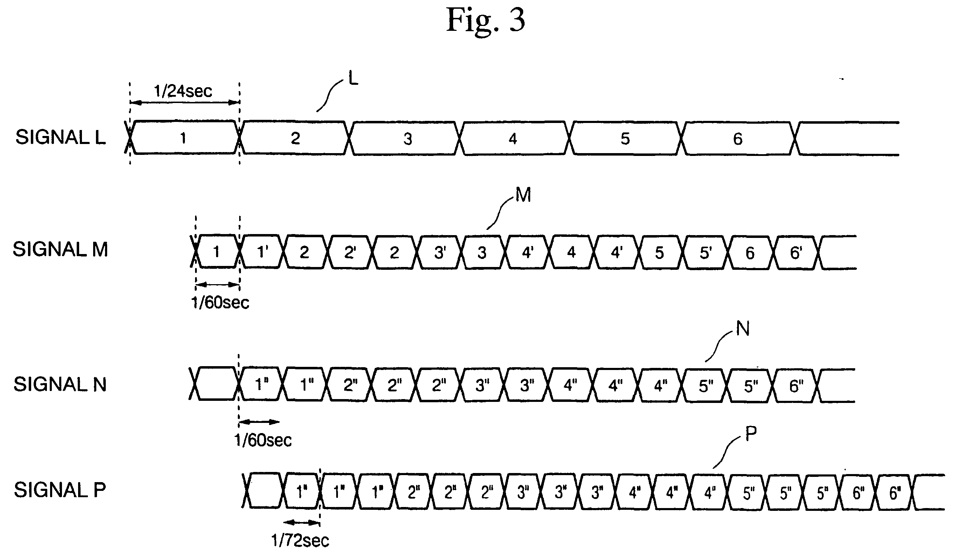

Conventionally, a television-cinema system (referred to as a telecine system, hereinafter) is used when images and sound recorded at twenty-four frames per second in a movie film are converted into electrical NTSC (National Television System Committee) image and sound signals. Fig. 2 is a block diagram showing an image display device using the conventional telecine system. In Fig. 2, the image display device comprises an image signal 10 input from some external unit, for example, an image signal 10 of sixty fields per second by an NTSC system, which is obtained from the image signal of twenty-four frames as a signal L shown in Fig. 3; an analog-to-digital (A/D) converter 11 which converts the NTSC image signal into a digital signal; a telecine signal discriminator 12 which determines whether a digital signal converted from the image signal is a telecine signal, and at the same time, computes a refresh rate of an original picture signal to be converted into the image signal 10 as a telecine signal; an interlaced/progressive (referred to as IP, hereinafter) converter 13 which converts a signal determined to be a telecine signal by a pull-down system; a synchronous processor 14 which generates various timing signals corresponding to the image signals input; a memory 15 storing and reading the signal which is converted by the IP converter 13 (IP signal) at a timing signal generated from the synchronous processor 14 when used in IP conversion; and a plasma display module 16 as a display for displaying the image signal after conversion by IP conversion (IP signal). The IP converter 13 converts the image signal of twenty-four frames per second from a source film according to a predetermined sequence into an image (video) signal of sixty fields per second.

In the image display device, the image signal 10 shown in Fig. 3 input from some external unit, which is obtained by the signal L from the source film is converted into a digital signal M shown in Fig. 3 by the A/D converter 11. The digital signal M is input into the telecine signal discriminator 12 in order to determine whether the digital signal M input is a telecine signal, and when the digital signal M is determined to be a telecine signal, the telecine signal discriminator 12 computes a refresh rate of an original image signal to be converted into the image signal 10 as a telecine signal.

Furthermore, in the IP converter 13, a 2-3 pull-down system is carried out according to the refresh rate to convert the digital signal M into the IP signal, and the IP signal is stored in the memory 15 according to the timing signal generated from the synchronous processor 14. The IP signal stored in the memory 15 is described as a signal N shown in Fig. 3. Furthermore, an image signal P is read from the memory 15 according to the refresh rate computed, and the image signal P is input into a plasma display module 16 to display a picture according to the image signal P.

In the telecine system, an image signal recorded at twenty-four frames per second in a source film, such as a movie film, is converted into an NTSC signal. In Fig. 3, the signal L is an image signal from the source film as the original picture signal and the signal M is an NTSC signal which is converted from the signal L. Since the NTSC signal is an interlaced signal, the NTSC signal needs to be resolved into odd fields and even fields. In the signal M shown in Fig. 3, numerals 1, 2, 3, ... are in the odd fields and numerals 1', 2', 3', ... are in the even fields. The signal M recorded in the above system is converted into the NTSC signal by the 2-3 pull-down conversion.

In fact, the 2-3 pull-down system and the IP conversion system are used together in many cases, and the signal N is obtained by rearranging the NTSC signal using these two systems. The signal N is obtained by converting the signal M by the IP conversion and the 2-3 pull-down conversion. In the signal N shown in Fig. 3, for example, a numeral 1" is a composite signal of 1 and 1'in the signal M, a numeral 2" is a composite signal of 2 and 2' in the signal M, and similarly, numerals 3" to n" are composite signals of 3 to n and 3' to n'. Using these composite signals, for example, the image of numeral 1" in the signal N is the same image as that of the numeral 1 in the signal L; therefore, high quality picture is obtained without deteriorating the quality from the original picture.

However, in the conventional image display device, when an object continuously moves from the first frame to the fifth frame by a certain amount in the signal L shown in Fig. 3, since the width of frames of 1" (two frames are continuously displayed) differs from the width of frames of 2" (three frames are continuously displayed) in the signal N, the display time for each frame differs between 1" and 2". That is, in a usual 2-3 pull-down system, in a picture in which the object continuously moves by a certain amount, for example, a scene in which the object horizontally passes across a display, the object continuously moves and stops; therefore, there is a problem in that the object does not appear to move smoothly.

### BRIEF SUMMARY OF THE INVENTION

To solve the above problem, an object of the present invention is to provide an image display device which smoothly outputs and displays a picture without jerkiness when dynamic playback is carried out even if picture reproduction from the source film is carried out using the 2-3 pull-down system.

To achieve the above object, an aspect of the present invention provides an image display device comprising: an analog-to-digital converter converting an image signal input from an external unit into a digital signal; a telecine signal discriminator for determining whether the digital signal is a telecine signal and computing a refresh rate of an original picture signal to be converted into the image signal; an interlaced/progressive converter converting the telecine signal into an IP signal using a 2-3 pull-down system; a memory storing the IP signal; and a synchronous processor for read for reading an image signal from the memory at a timing which is synchronized with the refresh rate of the original picture signal and outputting the signal to a display.

In the image display device, a refresh rate of the synchronous processor for read may be set at an integral number of times of the refresh rate of the original picture signal.

Furthermore, the IP signal may be stored in the memory according to an input timing of the image signal input from an external unit.

Furthermore, the 2-3 pull-down system may be carried out according to an input timing of the image signal input from an external unit.

According to the above aspect, since the synchronous processor for read reads the image signal stored in the memory according to the timing synchronized with the refresh rate of the original picture signal and outputs the image signal to the display, the image display device smoothly outputs and displays a picture without jerkiness when dynamic playback is carried out.

### BRIEF DESCRIPTION OF THE SEVERAL VIEWS OF THE DRAWINGS

Fig. 1 is a block diagram showing an image display device of an embodiment according to the present invention.

Fig. 2 is a block diagram showing a conventional image display device.

Fig. 3 is a timing chart showing a signal wave form in each block in Figs. 1 and 2.

### DETAILED DESCRIPTION OF THE INVENTION

An embodiment of the present invention will be explained below.

Fig. 1 is a block diagram showing an image display device according to the present invention. In Fig. 1, the image display device comprises an image signal 10 input from an external unit, for example, an image signal of sixty fields per second in an NTSC system obtained from the image signal of twenty-four frames per second as a signal L shown in Fig. 3; an analog-to-digital (A/D) converter 11 which converts the image signal into a digital signal; a telecine signal discriminator 12 which determines whether a digital signal converted from the image signal is a telecine signal, and at the same time, computes a refresh rate of an original image signal to be converted into the image signal 10; an interlace/progressive (referred to as IP, hereinafter) converter 13 which converts a signal determined to be a telecine signal by a pull-down system; a synchronous processor 14 which generates various timing signals so as to synchronize with the image signals input; a memory 15 storing and reading the signals converted by the IP converter 13 according to the timing signals generated from the synchronous processor 14 when used in IP conversion; and a display module 16 such as a plasma display module showing the image signal after it is IP-converted. The IP converter 13 converts a signal of twenty-four frames per second from a source film into an image (video) signal of sixty fields per second according to a predetermined sequence.

The picture display further comprises a synchronous processor for read 17 independently provided which is separated from the synchronous processor 14. The synchronous processor for read 17 reads the signals stored in the memory 15 according to the timing signals which are synchronized with the refresh rate of the original image signal and outputs the signals read to the plasma display module 16. That is, in the 2-3 pull-down process for the source film, the synchronous processor for read 17 operates at a timing so as to synchronize with the image signal input at the input side and processes the image signal at a timing for synchronizing which differs from the timing and is independent at the output side.

In the picture display, the image signal obtained by the signal L of the source film input from the external unit is converted to the digital signal M shown in Fig. 3 in the A/D converter 11 and the signal M is input into the telecine signal discriminator12 to determine whether the signal M is a telecine signal. If the signal M is a telecine signal, the refresh rate of the original picture, which is prior to telecine conversion, is computed.

Furthermore, in the IP converter 13, the 2-3 pull-down process is carried out with reference to the refresh rate and the signal processed is stored in the memory 15 according to the timing signal generated from the synchronous processor 14. The signal processed is the signal N which is shown in Fig. 3. Subsequently, on the basis of the refresh rate of the original picture which is computed in the telecine signal discriminator 12, the signal stored in the memory 15 is read according to the timing signal for read generated from the synchronous processor for read 17, and the signal P which is read is input into the plasma display module to display pictures.

The refresh rate of the synchronous processor for read 17 can be set to an integral number of times the refresh rate (number of frames per second in the original picture of the source film) of the original picture shown as the signal L in Fig. 3. In the present embodiment, for example, the refresh rate of the synchronous processor for read 17 is set to three times the refresh rate of the original picture, that is, 1/72 seconds per frame, shown as the signal P in Fig. 3. The image signal read from the memory 15 is input into the plasma display module 16 to display pictures.

As described above, an embodiment of the present invention is explained in detail with reference to the figures; however, the specific configuration is not limited to the embodiment and can comprise other designs which are within the scope of the present invention.

## Claims

1. An image display device comprising:
an analog-to-digital converter for converting an image signal input from an external unit into a digital signal;
a telecine signal discriminator for determining whether the digital signal is a telecine signal and computing a refresh rate for an original picture signal to be converted into the image signal;
an interlaced/progressive converter for converting the telecine signal into an IP signal by a 2-3 pull-down system;
a memory for storing the IP signal; and
a synchronous processor for read for reading an image signal from the memory at a timing synchronized with the refresh rate of the original picture signal and outputting the signal to a display.

2. An image display device according to claim 1, wherein a refresh rate of the synchronous processor for read is set to an integral number of times of the refresh rate of the original picture signal.

3. An image display device according to claim 1, wherein the IP signal is stored in the memory according to the timing of the image signal input from an external unit.

4. An image display device according to claim 1, wherein the 2-3 pull-down system is carried out according to an input timing of the image signal input from an external unit.
